# EUROPEAN PATENT APPLICATION

(11) **EP 0 616 917 A1**
(43) Date of publication of application: **28.09.1994**
(21) Application number: 94102310.3
(22) Date of filing: 16.02.1994
(51) Int. Cl.: B60K 25/02

(54) **A device for mounting a pump of an auxiliary hydraulic circuit in a commercial vehicle**

(30) Priority: 26.03.1993 IT TO930065 U
(71) Applicant: FARID S.p.A., I-12084 Mondovi'(Cuneo (IT)
(72) Inventor: Merlo, Giuseppe, I-28026 Omegna (Novara) (IT)
(74) Representative: Marchitelli, Mauro

(57) **Abstract**

A device for mounting a pump of an auxiliary hydraulic circuit in a commercial vehicle. The device serves for mounting a pump (16) in the front portion of a vehicle with an internal combustion engine arranged longitudinally and with a cooling fan (8) which is arranged eccentrically relative to the engine shaft.

The device comprises a mounting (14) fixed to the chassis of the vehicle for supporting the pump (16) at a distance from the axis of the fan greater than the maximum radius thereof. The pump is driven by a belt transmission (40) including a ring gear (42) fixed to a pulley (1) connected to the engine shaft.

## Description

The present invention relates to commercial vehicles having auxiliary hydraulic circuits for operating hydraulic power actuators such as, for example, jacks and the like.

The invention has been developed with particular reference to vehicles equipped for the collection, compacting and discharge of refuse and to vehicles for washing and/or disinfecting refuse-collection containers.

In this field, it is well-known to provide the vehicle with hydraulic cylinders which control various operative functions, in particular, the lifting and tipping of the refuse-collection containers, the compacting of the refuse collected in the load opening of the vehicle, and the discharge of the mass of refuse. The hydraulic cylinders are operated by a pump connected in an auxiliary hydraulic circuit.

The present invention relates specifically to a device for mounting such a pump in a commercial vehicle.

Basically, there are two ways of connecting the pump to the engine of the vehicle.

A first, known solution provides for the pump to be connected to a power take-off connected to the driven shaft or to the driving shaft of the gearbox. This solution has been found expensive because of the engagement mechanisms necessary to take the drive from one of the gear shafts. This solution also needs complex and expensive synchronization devices or safety mechanisms which allow the power take-off to operate only when the clutch is disengaged.

A solution which is usually preferred for reasons of cost provides for the pump to be connected directly to the engine shaft. With engines arranged longitudinally, the front end of the engine shaft projects from the engine block and carries a cooling fan facing the vehicle's radiator. If the cooling fan is coaxial with the engine shaft, the solution usually adopted for the mounting of the pump provides for the pump shaft to be fixed directly to the engine shaft by means of a shaft coaxial with the fan and extending through the radiator of the vehicle.

This solution cannot be used when the cooling fan is arranged eccentrically relative to the engine shaft and is connected thereto by means of a belt transmission.

The object of the present invention is to provide a particularly simple and cheap solution which enables the pump to be connected to the front end of the engine shaft in a vehicle with an engine arranged longitudinally and with a cooling fan which is eccentric relative to the engine shaft.

According to the present invention, this object is achieved by the provision of a device having the characteristics which form the subject of the main claim.

Further characteristics and advantages of the present invention will become clear in the course of the detailed description which follows, purely by way of non-limiting example, with reference to the appended drawings, in which:
Figure 1 is a schematic front elevational view of a portion of a commercial vehicle having a device according to the invention,
Figure 2 is a section taken on the line II-II of Figure 1, and
Figure 3 is a perspective view of the portion indicated by the arrow III in Figure 2.

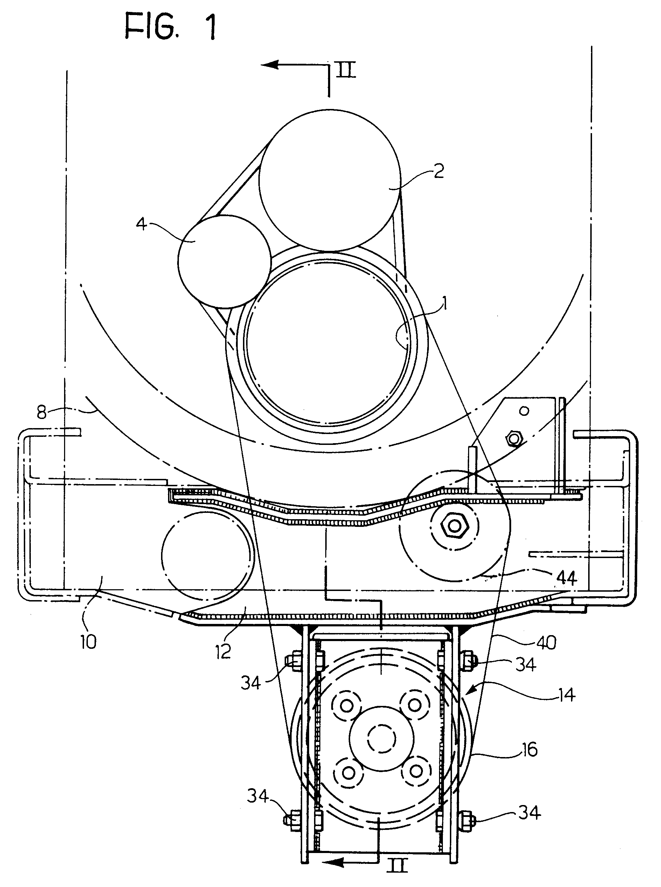

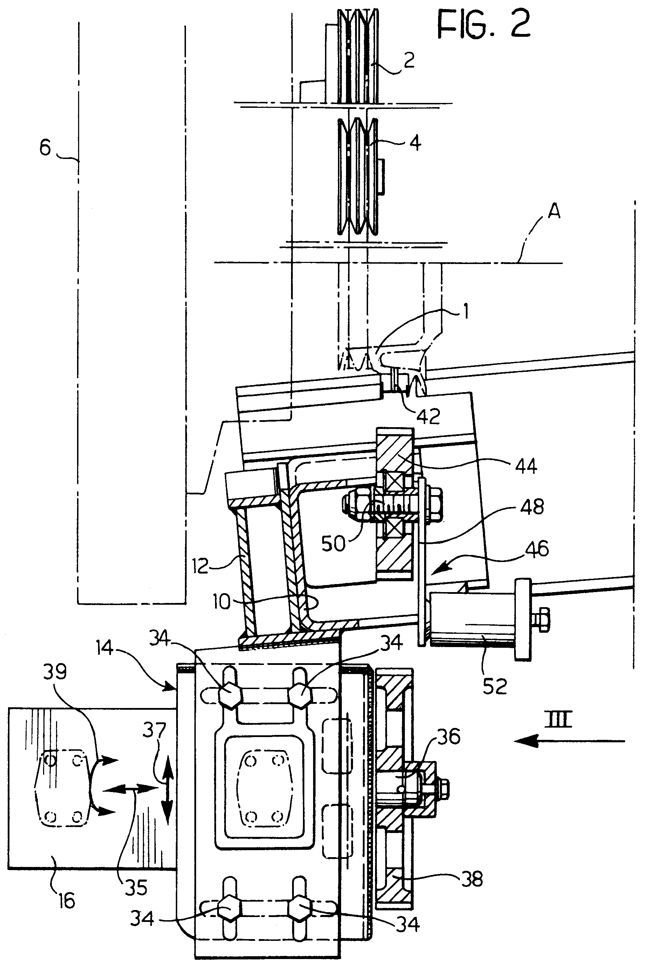

With reference to the drawings, a pulley, indicated 1, is keyed to the engine shaft of an internal combustion engine (not visible in the drawings) which is arranged longitudinally. The axis of rotation of the engine shaft is indicated A in Figure 2. The pulley 1 drives an eccentric pulley 2, in conventional manner, by means of a double trapezoidal-belt transmission including a tensioning pulley 4. A cooling fan is keyed to the eccentric pulley 2 facing the radiator 6 of the vehicle. The area occupied by the cooling fan is indicated 8 in Figure 1.

A C-sectioned cross-member forming part of the chassis of the vehicle is indicated 10. A reinforcing flange 12 carrying a mounting 14 for a pump 16 is welded to the cross-member 10.

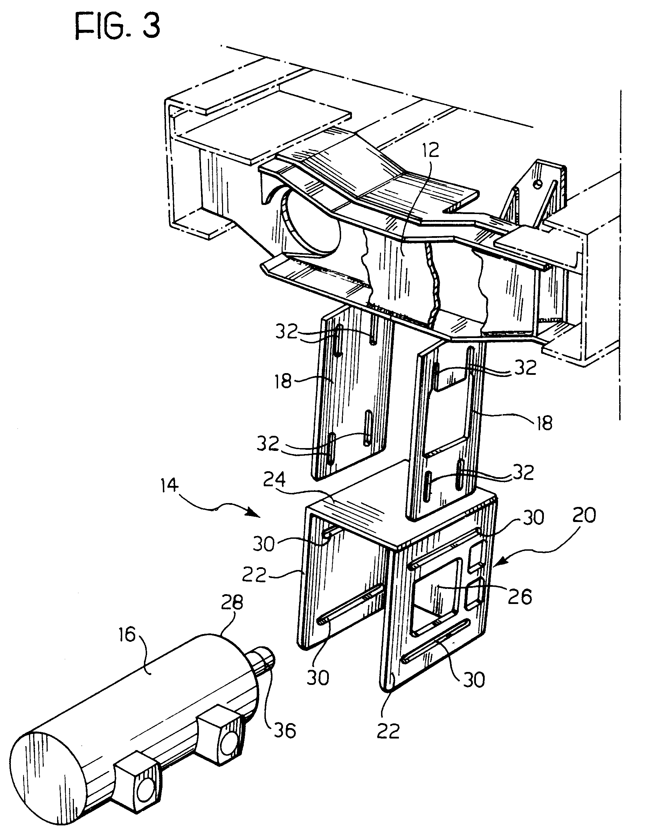

As can be seen in greater detail in Figure 3, the mounting 14 comprises a first portion which is fixed relative to the chassis and is constituted by two parallel plates 18 and a second portion 20 which is fixed relative to the body of the pump 16. The second portion 20 has two parallel plates 22 facing respective plates 18 and joined together by an upper plate 24 and a front plate 26. The front plate 26 has holes, not visible in the drawings, for fixing to the front surface 28 of the pump 16 by means of screws. Each plate 22 has a pair of slots 30 which extend substantially horizontally (or, more precisely, parallel to the axis of the pump 16) whereas, the plates 18 have slots 32 extending vertically. A screw 34 is inserted in the hole defined by the intersection of each pair of slots 30, 32 (see Figures 1 and 2) . The screws 34 enable the second portion 20 of the mounting 14 to be restrained in a predetermined position relative to the fixed plates 18. The slackening of the screws 34 enables the orientation of the pump 16 to be varied in the directions indicated by the arrows 35, 37, and 39 in Figure 2.

With particular reference to Figure 2, the output shaft 36 of the pump 16 extends through the front plate 26 of the mounting 14 and carries a toothed pulley 38. The pulley 38 cooperates with a toothed belt 40 (Figure 1) which is driven by a ring gear 42 fixed to the pulley 1 which is keyed to the engine shaft.

The toothed belt 40 cooperates with a gear 44 of a resilient tensioning device 46 of known type. The tensioning device 46 comprises an arm 48 carrying a pin 50 on which the gear 44 is rotatable. The arm 48 is connected to a resilient biasing element 52 which is fixed to the chassis of the vehicle or to the engine block.

It is clear from the foregoing description that the solution according to the present invention enables the pump 16 to be mounted in the front portion of a commercial vehicle with an engine arranged longitudinally, even when the cooling fan is arranged eccentrically relative to the axis A of the engine shaft, since the mounting 14 and the pump 16 are outside the area 8 occupied by the cooling fan. The mounting 14 enables the position of the pump 16 to be adjusted easily relative to the chassis of the vehicle. Moreover, compared with known solutions with pumps disposed in the front portion of the vehicle, it avoids modification of the radiator 16 to allow the element which connects the pump 16 to the engine shaft to extend through it.

## Claims

1. A device for mounting a pump (16) of an auxiliary hydraulic circuit in a commercial vehicle having an internal combustion engine arranged longitudinally with a pulley (1) keyed to the engine shaft which drives, by means of a belt transmission, a cooling fan which is eccentric relative to the engine shaft, characterized in that it comprises a mounting (14) fixed to the chassis of the vehicle (10) for supporting the pump (16) at a distance from the axis of the fan greater than the maximum radius thereof, and a toothed-belt transmission (40) interposed between the drive shaft (36) of the pump (16) and a ring gear (42) which is fixed to the pulley (1), the toothed belt (40) cooperating with a resilient tensioner (46).

2. A device according to Claim 1, characterized in that the mounting (14) comprises a first portion (18) which is fixed relative to the chassis (10) and a second portion (20) which is fixed relative to the body of the pump (16), the two portions (18, 20) being movable relative to one other and being interconnected by restraining means (34) which can clamp the two portions (18, 20) in a predetermined relative position.

3. A device according to Claim 2, characterized in that the first and second portions of the mounting (14) have respective plates (18, 22) which face each other and have respective slots (30, 32) which extend substantially at 90° to each other, and in which clamping screws (34) engage.
